# EUROPEAN PATENT APPLICATION

(11) **EP 4 738 665 A1**
(43) Date of publication of application: **06.05.2026**
(21) Application number: 25210862.6
(22) Date of filing: 23.10.2025
(51) Int. Cl.: H02K 7/18, H02K 35/00, E05F 15/614

(54) **ROTARY SELF-POWER GENERATING DEVICE**

(30) Priority: 29.10.2024 CN 202411514930
(71) Applicant: Oodles Systems Limited, Kowloon Bay (HK)
(72) Inventor: NG, Chi Chiu, Kowloon Bay (HK)
(74) Representative: Chung, Hoi Kan

(57) **Abstract**

A rotary self-power generating device, comprising: a power generation coil module (1), a magnetic member (2), and a reciprocating rotary assembly (3); wherein the rotary assembly is operatively connected to a drive mechanism; wherein one of the power generation coil module and the magnetic member is mounted on the rotary assembly and is driven by the rotary assembly to undergo relative rotation with respect to the other thereof, thereby changing a magnetic flux within the power generation coil module; wherein output terminals of the power generation coil module are configured for connection to an electrical load. The relative separation between the power generation coil module (1) and the magnetic member (2) allows for adaptation of their relative positions to match a motion of an article, enabling self-power generation and providing sufficient electrical energy for different electrical loads, in contrast to conventional oscillating magnetic core structures.

## Description

### FIELD OF THE INVENTION

The present invention relates to an apparatus capable of self-generating electricity through rotation.

### BACKGROUND OF THE INVENTION

The continuous development and proliferation of the Internet of Things (IoT) in recent years have created a demand for monitoring the status of various objects through the integration of sensors and wirelessly transmitting corresponding status signals. This capability is essential for enabling intelligent linkage and automated control.

However, sensors and wireless transmission components require a power source to operate. A relatively common conventional method for providing such power is the integration of batteries. Nonetheless, batteries are susceptible to depletion, necessitating periodic maintenance by personnel to replace or recharge them. This requirement introduces numerous inconveniences and operational drawbacks.

In light of this, for certain objects where the control signals to be transmitted are relatively simple, and which typically undergo corresponding physical actions when signals need to be sent (e.g., the opening and closing of a door lock), it has been proposed to harness these actions to drive a self-generating device. Such a device would produce electrical power to consequently trigger a wireless signal transmission circuit to send a signal.

Conventionally, a common type of self-generating device employs a coil winding in conjunction with a movable or oscillating magnetic core. Electrical power is generated when the movement or oscillation of this magnetic core brings it into proximity or contact with different magnetic bodies, thereby altering the magnetic flux linkage within the coil winding and inducing an electrical current.

However, a significant drawback of such conventional designs is that the oscillation of the magnetic core is typically constrained to occur within or in very close proximity to the coil winding. For the coil winding to generate a sufficient amount of electrical power, a substantial change in magnetic flux linkage is required, which in turn necessitates the magnetic core to remain relatively close to the coil. Consequently, this structural arrangement inherently limits the amplitude of the magnetic core's oscillation. This limitation results in a relatively low power output, often insufficient to effectively drive certain electronic devices that have comparatively higher power consumption requirements.

### SUMMARY OF THE INVENTION

The present invention provides a device for self-power generation, which is configured to rotationally drive a power generation coil module or a magnetic member. The device as a whole is adapted to cooperate with the movement of a corresponding article to drive relative rotation between the power generation coil module and the magnetic member of the self-power generation device, thereby enabling inductive power generation in the power generation coil module to satisfy the power supply requirements of an electrical load.

A rotary self-power generating device, comprising:
a power generation coil module;
a magnetic member; and
a rotary assembly operatively connected to a drive mechanism;
wherein one of the power generation coil module and the magnetic member is mounted on the rotary assembly such that, upon actuation by the drive mechanism, the rotary assembly causes a relative rotational movement between the power generation coil module and the magnetic member; wherein said relative rotation is configured to correspondingly induce a change in magnetic flux within the power generation coil module to generate electrical energy in the power generation coil module;
and wherein output terminals of the power generation coil module are configured for connection to an electrical load to output the generated electrical energy.

Furthermore, he rotary assembly includes a rotating member and a fixed member, the rotating member is pivotally connected to the fixed member by a rotating shaft, the power generation coil module and the magnetic member are respectively installed on the rotating member and the fixed member, and the rotating member is connected to the drive mechanism.

Furthermore, said power generation coil module is mounted on said rotating member; and
two magnetic members are disposed radially outward of an outer periphery of said rotating member and at a position corresponding to said power generating coil module.

Furthermore, a portion of said power generation coil module extends toward said fixed member, and is positioned between two magnetic members.

Furthermore, the power generation coil module comprises a magnetic core and a coil winding wound around the magnetic core, wherein a portion of the magnetic core extends to the fixing member and is positioned between two magnetic members.

Furthermore, the rotating member comprises a rotating block;
the rotating block is pivotally connected to the rotating member,
the rotating member comprises two limiting blocks configured to limit a range of pivotal movement of the rotating block;
and the rotating block is connected to the drive mechanism.

Furthermore, the device is installed on a door and operatively connected to a lock assembly thereof, and the drive mechanism is a latch bolt, a lock cylinder, or a locking bolt of the lock assembly.

The rotating member further comprises a reset device;
the drive mechanism pushes the rotating block to rotate, and one of limiting blocks pushes the rotating member to drive the power generation coil module to separate from one of magnetic members;
a change in magnetic flux of the power generation coil module causes the coil winding to generate induced power;
and as the power generation coil module approaches another one of magnetic members, the magnetic flux of the power generation coil module changes again to cause the coil winding to generate induced power;
while the drive mechanism resetting, the reset device drives the rotating block to rotate in a reverse direction, and one of the limiting blocks pushes the rotating member to drive the power generation coil module to separate from one of the magnetic members;
and as the power generation coil module approaches another one of magnetic members, the magnetic flux of the power generation coil module changes again, inducing the coil winding to generate induced power.

Furthermore, the device is mounted on a guide rail, the guide rail being provided with a protrusion configured to abut against a rotating block, the rotating member is further provided with a reset device;
the guide rail slides, inducing the protrusion to push the rotating block to rotate, and one of the limiting blocks pushes the rotating member to drive the power generation coil module to separate from one of the magnetic members, thereby the magnetic flux of the power generation coil module changes, inducing power generation in the coil winding;
as the power generation coil module approaches another one of the magnetic members, the magnetic flux of the power generation coil module changes again, inducing power generation in the coil winding;
while the drive mechanism resets, the reset device drives the rotating block to rotate in a reverse direction, and another one of the limiting blocks pushes the rotating member to drive the power generation coil module to separate from the magnetic member, thereby the magnetic flux of the power generation coil module changes, inducing power generation in the coil winding;
as the power generation coil module approaches another one of the magnetic members, the magnetic flux of the power generation coil module changes again, inducing power generation in the coil winding.

Furthermore, the device is mounted on a device with a rotating shaft, the rotating shaft is connected to the rotating block and drives the rotating block to rotate, and one of the limiting blocks pushes the rotating member to drive the power generation coil module to separate from one of the magnetic members, wherein a change in magnetic flux of the power generation coil module induces a coil winding to generate electricity;
while the power generation coil module approaches another one of the magnetic members, the magnetic flux of the power generation coil module changes again, inducing the coil winding to inductively generate electricity;
the rotating shaft rotates in the reverse direction to drive the rotating block to rotate in the reverse direction, and another limiting block pushes the rotating member to drive the power generation coil module to separate from the magnetic member, wherein a change in magnetic flux of the power generation coil module induces the coil winding to generate electricity;
while the power generation coil module approaches another one of the magnetic members, the magnetic flux of the power generation coil module changes again, inducing the coil winding to inductively generate electricity.

Furthermore, the rotating shaft is a hinged rotating shaft, and the rotating shaft is connected to the rotating block by a gear transmission device.

Furthermore, the rotating shaft is a rotating shaft of a rotary switch.

Furthermore, the rotating shaft is coupled to a push-button switch, the coupling being formed by an interengaging rack and gear.

Furthermore, the rotary shaft is coupled to a pedal assembly.

Beneficial Effects of the Present Invention: by utilizing the drive mechanism to induce relative rotation between the power generation coil module and the magnetic member, a change in magnetic flux is achieved within the coil winding of the power generation coil module, thereby generating electrical energy. Since the power generation coil module and the magnetic member in the present invention are relatively separated from each other, compared to the conventional oscillating magnetic core structures, the present invention can adjust the relative positions of the two components according to the movement requirements of the object to match its motion for self-power generation. This enables the generation of sufficient electrical energy to meet the power supply needs of various electrical loads.

### BRIEF DESCRIPTION OF THE DRAWINGS

FIG. 1 is a schematic view illustrating the structure of a first embodiment of the rotary self-generating electric apparatus according to the present invention.
FIG. 2 is a schematic structural view of the second embodiment of the rotary self-generating device of the present invention.
FIG. 3 is a schematic structural diagram of a first embodiment of the present invention.
FIG. 4 is a schematic structural diagram of a second embodiment of the present invention.
FIG. 5 is a schematic structural diagram of a third embodiment of the present invention.
FIG. 6 is a schematic structural diagram of a fourth embodiment of the present invention.
FIG. 7 is a structural schematic diagram of a fifth embodiment of the present invention.
FIG. 8 is a schematic structural diagram of a sixth embodiment of the present invention.
FIG. 9 is a schematic structural diagram of the seventh embodiment of the present invention.
FIG. 10 is a schematic structural diagram of the eighth embodiment of the present invention.
FIG. 11 is a structural schematic diagram of a ninth embodiment of the present invention.
FIG. 12 is a schematic structural diagram of the tenth embodiment of the present invention.

### DESCRIPTION OF THE EMBODIMENTS

Hereinafter, the inventive concept, specific structure, and resulting technical effects of the present invention will be clearly and completely described in conjunction with embodiments and accompanying drawings, to provide a full understanding of the objectives, technical solutions, and effects of the present invention. It should be noted that, where not conflicting, the embodiments described herein and the features thereof may be combined with one another.

It is to be understood that, unless otherwise specified, when a feature is referred to as being "fixed" or "connected" to another feature, it can be directly fixed or connected to the other feature, or indirectly fixed or connected to the other feature. Furthermore, the descriptions (or terms) 'upper,' 'lower,' 'left,' 'right,' 'top,' and 'bottom' used herein are merely relative to the mutual positional relationships of the various components of the present invention as shown in the accompanying drawings.

Furthermore, unless otherwise defined, all technical and scientific terms used herein have the same meaning as commonly understood by one of ordinary skill in the art to which this disclosure pertains. The terminology used in the present specification is merely for describing particular embodiments and is not intended to be limiting of the invention. As used herein, the term "and/or" includes any combination of one or more of the associated listed items.

It is to be understood that although terms such as first, second, third, and the like may be used herein to describe various elements, these elements are not to be limited by these terms. These terms are used solely for the purpose of distinguishing one type of element from another of the same type. For example, without departing from the spirit and scope of the present disclosure, a first element may also be referred to as a second element, and similarly, a second element may also be referred to as a first element.

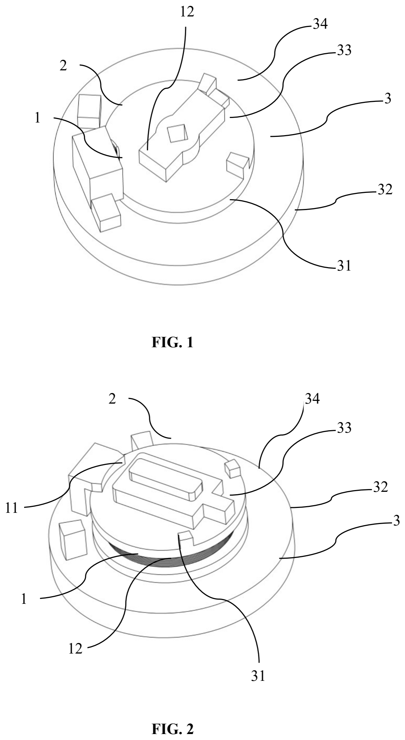

As shown in FIG. 1, a rotary self-power generating device includes a power generation coil module (1), a magnetic member (2), and a rotary assembly (3).

The drive mechanism comprises a component that corresponds to a motion generated by an operation of an associated article. The rotary assembly (3) is operatively connected to a drive mechanism. The drive mechanism comprises a component that corresponds to a motion generated by an operation of an associated article. The drive mechanism is a component that corresponds to a motion generated by an operation of an associated article. Detailed descriptions of various embodiments are provided hereinbelow.

One of the power generation coil module (1) and the magnetic member (2) is mounted on the rotary assembly (3), and the other thereof is disposed in a relatively stationary position. Wherein, upon a relative rotational movement caused by the rotary assembly (3) that brings the power generation coil module (1) and the magnetic member (2) into proximity or contact, a magnetic flux within the power generation coil module (1) changes, thereby generating electrical energy. Likewise, upon a relative rotational movement in a reverse direction that separates the power generation coil module (1) and the magnetic member (2), the magnetic flux within the power generation coil module (1) changes again, thereby generating electrical energy. The electrical energy generated by the power generation coil module (1) is output via an output terminal to an electrical load.

In an embodiment, the rotary assembly (3) includes a rotating member (31) and a fixed member (32). The rotating member (31) is pivotally connected to the fixed member (32) by a rotating shaft. The power generation coil module (1) and the magnetic member (2) are respectively installed on the rotating member (31) and the fixed member (32). The rotating member (31) is operatively connected to the drive mechanism and is configured to be driven thereby.

More specifically, the magnetic member 2 may be mounted on the rotating member 31, and the power generation coil module 1 may be correspondingly mounted on the fixed member 32. Conversely, the power generation coil module 1 may be mounted on the rotating member 31, and the magnetic member 2 may be correspondingly mounted on the fixed member 32, to achieve the same effect. However, in a preferred embodiment of the present invention, the power generation coil module 1 is mounted on the rotating member 31. This is specifically to increase the power output of the self-generating device, as the coil winding 12 of the power generation coil module 1 typically comprises a large number of turns wound from a wire. Therefore, sufficient space is available on the rotating member 31 for mounting and securing the coil winding 12. Concurrently, a corresponding number of magnetic members 2, such as two sets, may be mounted on the fixed member 32 as needed for the application. When the power generation coil module 1 is in proximity to different magnetic members 2, power can be inductively generated. Thereby, different positional states of an object can be transmitted via corresponding power generation response signals.

The inventor provides two structure demonstrations for the power generating coil module 1 to satisfy different usage requirements. n a first configuration as shown in FIG. 1, the power generating coil module 1 is integrally mounted on an edge of a rotating member 31. Tow magnetic bodies 2 are arranged at a predetermined spacing on opposing sides of the power generating coil module 1. Wherein rotational movement of the rotating member (31) causes the power generation coil module (1) to move relative to the two magnetic members (2), thereby inducing a change in magnetic flux and generating electrical energy.

In a second configuration as shown in FIG. 2, at least a portion of the rotating member (31) comprises the magnetic core (11) of the power generation coil module (1). The coil winding (12) is wound around the magnetic core (11), and a portion of the magnetic core (11) extends toward the fixed member (32). Two magnetic members (2) are disposed on the fixed member (32) at positions corresponding to opposing sides of the portion of the magnetic core (11) that extends toward the fixed member (32). Wherein relative movement between the rotating member (31) and the fixed member (32) causes the portion of the magnetic core (11) extending toward the fixed member (32) to move relative to the two magnetic members (2), thereby changing a magnetic flux through the magnetic core (11) to induce electrical energy in the coil winding (12).

To facilitate the rotational angle of the rotating member 31 matching with the operational stroke of various objects, a rotating block 33 is provided on the rotating member 31. The rotating block (33) is pivotally connected to the rotating member (31). The rotating member (31) further comprises two limiting blocks (34) configured to limit a range of pivotal movement of the rotating block (33) between the two limiting blocks (34). The rotating block 33 is connected to a drive mechanism. Wherein, upon actuation by the drive mechanism, the rotating block (33) is driven to pivot within the range of pivotal movement. When the rotating block (33) engages a first one of the limiting blocks (34), the rotating block (33) drives the rotating member (31) to rotate, thereby moving the power generation coil module (1). When the drive mechanism is actuated in a reverse direction, the rotating block (33) pivots to engage a second one of the limiting blocks (34), thereby driving the rotating member (31) to rotate in a reverse direction. Thus, through the cooperation of the rotating block 33 and the limit blocks 34, the rotational stroke of the rotating member 31 can be matched with the operational stroke generated by the object.

Herein, various application scenarios for the rotary self-generating device are described in detail by way of specific embodiments.

### Embodiment 1

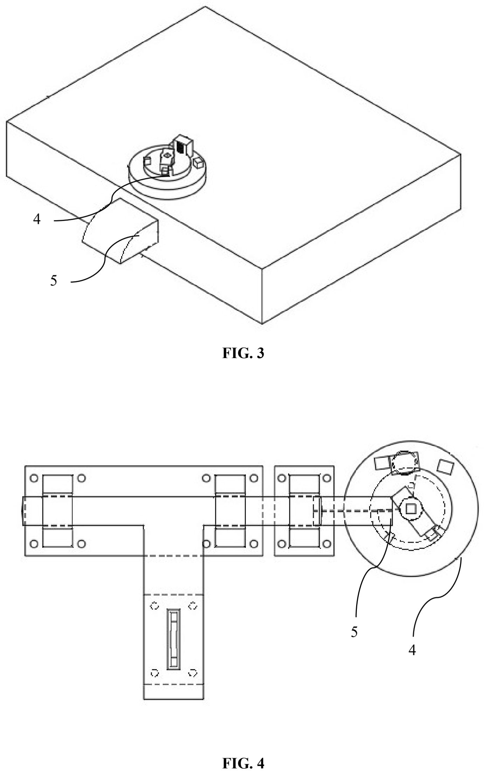

FIG. 3 illustrates an embodiment wherein the rotary self-power generating device (4) is installed on a door lock assembly. The door lock assembly includes a latch bolt (5). The rotary self-power generating device (4) is disposed such that the latch bolt (5) is operatively coupled to the drive mechanism of the device (4). The rotating member (31) includes a reset device. The latch bolt (5) constitutes the drive mechanism.

Upon extension of the latch bolt (5), the rotating block (33) is driven to rotate and engage a first one of the limiting blocks (34), thereby driving the rotating member (31) to move the power generation coil module (1) away from a first one of the magnetic members (2). This movement changes a magnetic flux within the power generation coil module (1), inducing electrical energy in the coil winding (12). As the power generation coil module (1) subsequently approaches a second one of the magnetic members (2), the magnetic flux changes again, thereby inducing electrical energy.

Upon retraction of the latch bolt (5), the reset device drives the rotating block (33) to rotate in an opposite direction to engage a second one of the limiting blocks (34), thereby driving the rotating member (31) to move the power generation coil module (1) away from a magnetic member (2). This movement changes the magnetic flux within the power generation coil module (1), inducing electrical energy in the coil winding (12). As the power generation coil module (1) subsequently approaches another magnetic member (2), the magnetic flux changes again, thereby inducing electrical energy.

The induced electrical energy is configured to power a wireless transmission device to transmit a status signal of the door lock assembly.

### Embodiment 2

FIG. 4 illustrates an embodiment wherein the rotary self-power generating device (4) is installed on a door lock assembly. The door lock assembly includes a locking bolt (6). The rotary self-power generating device (4) is disposed such that the locking bolt (6) is operatively coupled to the drive mechanism of the device (4). The rotating member (31) includes a reset device. The locking bolt (6) constitutes the drive mechanism.

Upon extension of the locking bolt (6), the rotating block (33) is driven to rotate and engage a first one of the limiting blocks (34), thereby driving the rotating member (31) to move the power generation coil module (1) away from a first one of the magnetic members (2). This movement changes a magnetic flux within the power generation coil module (1), inducing electrical energy in the coil winding (12). As the power generation coil module (1) subsequently approaches a second one of the magnetic members (2), the magnetic flux changes again, thereby inducing electrical energy.

Upon retraction of the locking bolt (6), the reset device drives the rotating block (33) to rotate in an opposite direction to engage a second one of the limiting blocks (34), thereby driving the rotating member (31) to move the power generation coil module (1) away from a magnetic member (2). This movement changes the magnetic flux within the power generation coil module (1), inducing electrical energy in the coil winding (12). As the power generation coil module (1) subsequently approaches another magnetic member (2), the magnetic flux changes again, thereby inducing electrical energy.

### Embodiment 3

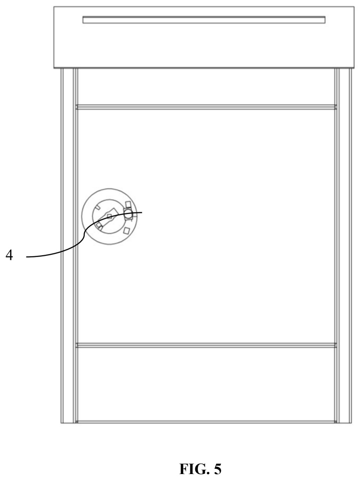

FIG. 5 illustrates an embodiment wherein the rotary self-power generating device (4) is installed on a door lock assembly. The door lock assembly includes a rotatable lock cylinder. A rotation shaft of the lock cylinder is connected to the rotating block (33) and is configured to drive the rotating block (33) to pivot.

Wherein pivotal movement of the rotating block (33) causes it to engage a first one of the limiting blocks (34), thereby driving the rotating member (31) to move the power generation coil module (1) away from a first one of the magnetic members (2). This movement changes a magnetic flux within the power generation coil module (1), inducing electrical energy in the coil winding (12). As the power generation coil module (1) subsequently approaches a second one of the magnetic members (2), the magnetic flux changes again, thereby inducing electrical energy.

Wherein rotation of the lock cylinder shaft in a reverse direction drives the rotating block (33) to pivot in a reverse direction, causing it to engage a second one of the limiting blocks (34) and thereby driving the rotating member (31) to move the power generation coil module (1) away from a magnetic member (2). This movement changes the magnetic flux within the power generation coil module (1), inducing electrical energy in the coil winding (12). As the power generation coil module (1) subsequently approaches another magnetic member (2), the magnetic flux changes again, thereby inducing electrical energy.

### Embodiment 4,

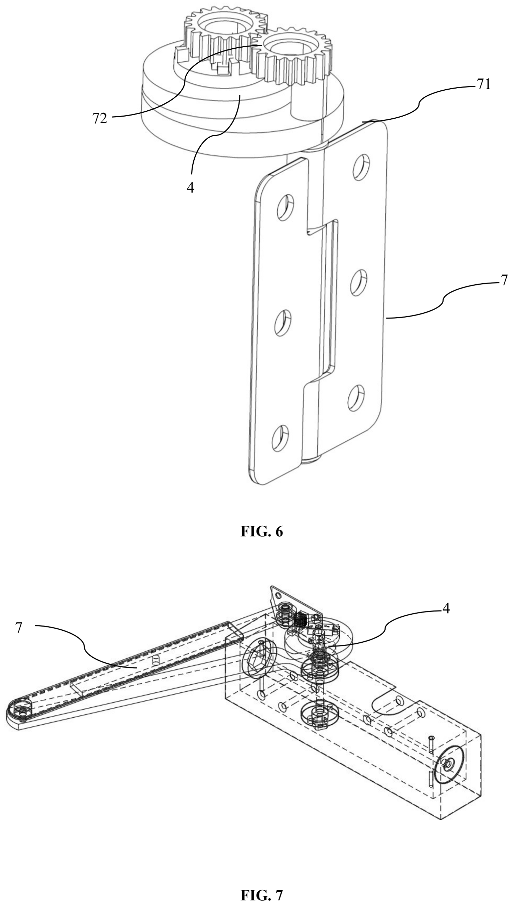

FIG. 6 illustrates an embodiment wherein the rotary self-power generating device (4) is associated with a hinge (7) of a door body. A pivot shaft (71) of the hinge (7) is connected to the rotating block (33) via a gear transmission device (72) and is configured to drive the rotating block (33) to pivot.

Wherein pivotal movement of the rotating block (33) causes it to engage a first one of the limiting blocks (34), thereby driving the rotating member (31) to move the power generation coil module (1) away from a first one of the magnetic members (2). This movement changes a magnetic flux within the power generation coil module (1), inducing electrical energy in the coil winding (12). As the power generation coil module (1) subsequently approaches a second one of the magnetic members (2), the magnetic flux changes again, thereby inducing electrical energy.

Wherein rotation of the pivot shaft (71) in a reverse direction drives the rotating block (33) to pivot in a reverse direction, causing it to engage a second one of the limiting blocks (34) and thereby driving the rotating member (31) to move the power generation coil module (1) away from a magnetic member (2). This movement changes the magnetic flux within the power generation coil module (1), inducing electrical energy in the coil winding (12). As the power generation coil module (1) subsequently approaches another magnetic member (2), the magnetic flux changes again, thereby inducing electrical energy.

### Embodiment 5

FIG. 7 illustrates an embodiment wherein the rotary self-power generating device (4) is associated with a door closer. The door closer includes a hinge (8) pivotally connected to a main body of the door closer by a rotary shaft. The rotary shaft is connected to the rotating block (33) and is configured to drive the rotating block (33) to pivot.

Wherein pivotal movement of the rotating block (33) causes it to engage a first one of the limiting blocks (34), thereby driving the rotating member (31) to move the power generation coil module (1) away from a first one of the magnetic members (2). This movement changes a magnetic flux within the power generation coil module (1), inducing electrical energy in the coil winding (12). As the power generation coil module (1) subsequently approaches a second one of the magnetic members (2), the magnetic flux changes again, thereby inducing electrical energy.

Wherein rotation of the rotary shaft in an opposite direction drives the rotating block (33) to pivot in an opposite direction, causing it to engage a second one of the limiting blocks (34) and thereby driving the rotating member (31) to move the power generation coil module (1) away from a magnetic member (2). This movement changes the magnetic flux within the power generation coil module (1), inducing electrical energy in the coil winding (12). As the power generation coil module (1) subsequently approaches another magnetic member (2), the magnetic flux changes again, thereby inducing electrical energy.

### Embodiment 6,

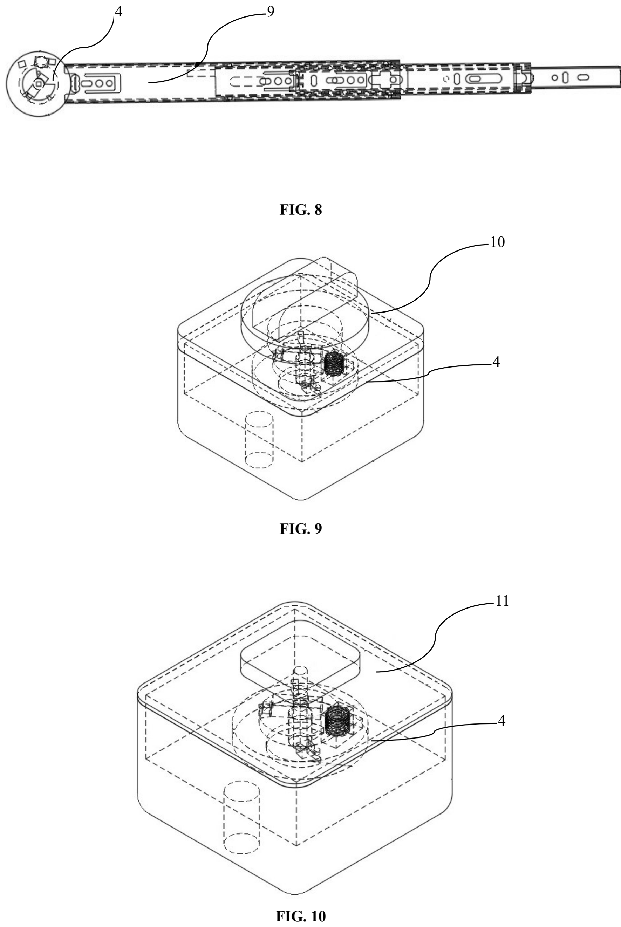

FIG. 8 illustrates an embodiment wherein the rotary self-power generating device (4) is mounted on a guide rail (9) of a rail-type push-pull device. The guide rail (9) comprises a protrusion configured to abut against the rotating block (33). The rotating member (31) includes a reset device.

Wherein sliding movement of the guide rail (9) causes the protrusion to push the rotating block (33) to pivot and engage a first one of the limiting blocks (34), thereby driving the rotating member (31) to move the power generation coil module (1) away from a first one of the magnetic members (2). This movement changes a magnetic flux within the power generation coil module (1), inducing electrical energy in the coil winding (12). As the power generation coil module (1) subsequently approaches a second one of the magnetic members (2), the magnetic flux changes again, thereby inducing electrical energy.

Upon cessation of the sliding movement, the reset device drives the rotating block (33) to pivot in an opposite direction to engage a second one of the limiting blocks (34), thereby driving the rotating member (31) to move the power generation coil module (1) away from a magnetic member (2). This movement changes the magnetic flux within the power generation coil module (1), inducing electrical energy in the coil winding (12). As the power generation coil module (1) subsequently approaches another magnetic member (2), the magnetic flux changes again, thereby inducing electrical energy.

### Embodiment 7,

FIG. 9 illustrates an embodiment wherein the rotary self-power generating device (4) is associated with a rotary switch (10). A rotating shaft of the rotary switch (10) is connected to the rotating block (33) and is configured to drive the rotating block (33) to pivot.

Wherein pivotal movement of the rotating block (33) causes it to engage a first one of the limiting blocks (34), thereby driving the rotating member (31) to move the power generation coil module (1) away from a first one of the magnetic members (2). This movement changes a magnetic flux within the power generation coil module (1), inducing electrical energy in the coil winding (12). As the power generation coil module (1) subsequently approaches a second one of the magnetic members (2), the magnetic flux changes again, thereby inducing electrical energy.

Wherein rotation of the switch shaft in a reverse direction drives the rotating block (33) to pivot in a reverse direction, causing it to engage a second one of the limiting blocks (34) and thereby driving the rotating member (31) to move the power generation coil module (1) away from a magnetic member (2). This movement changes the magnetic flux within the power generation coil module (1), inducing electrical energy in the coil winding (12). As the power generation coil module (1) subsequently approaches another magnetic member (2), the magnetic flux changes again, thereby inducing electrical energy.

### Embodiment 8,

FIG. 10 illustrates an embodiment wherein the rotary self-power generating device (4) is associated with a push-button switch (11). The push-button switch (11) is coupled to a rotational shaft via an interengaging rack and pinion. The pinion is connected to the rotating block (33) and is configured to drive the rotating block (33) to pivot.

Wherein actuation of the push-button switch (11) causes pivotal movement of the rotating block (33), engaging a first one of the limiting blocks (34) and thereby driving the rotating member (31) to move the power generation coil module (1) away from a first one of the magnetic members (2). This movement changes a magnetic flux within the power generation coil module (1), inducing electrical energy in the coil winding (12). As the power generation coil module (1) subsequently approaches a second one of the magnetic members (2), the magnetic flux changes again, thereby inducing electrical energy.

Wherein release of the push-button switch (11) causes the rack to drive the pinion to rotate in a reverse direction, thereby driving the rotating block (33) to pivot in a reverse direction to engage a second one of the limiting blocks (34) and driving the rotating member (31) to move the power generation coil module (1) away from a magnetic member (2). This movement changes the magnetic flux within the power generation coil module (1), inducing electrical energy in the coil winding (12). As the power generation coil module (1) subsequently approaches another magnetic member (2), the magnetic flux changes again, thereby inducing electrical energy.

### Embodiment 9

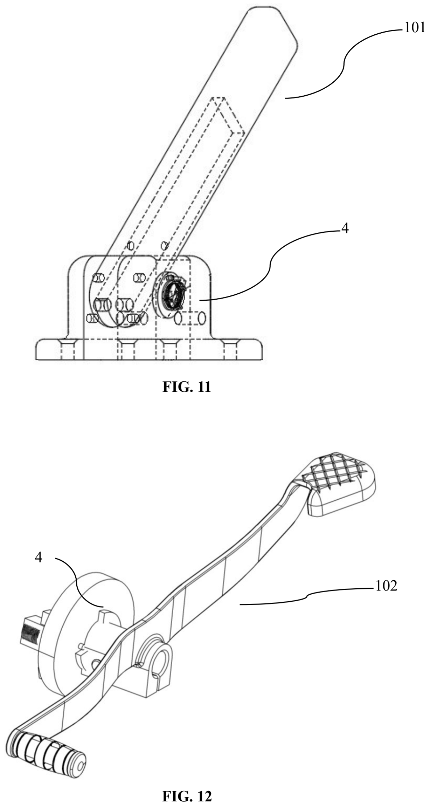

FIG. 11 illustrates an embodiment wherein the rotary self-power generating device (4) is associated with a vehicle handbrake device. A handbrake lever (101) is operatively coupled to the rotating block (33) via a gear assembly.

Wherein actuation of the handbrake lever (101) drives the rotating block (33) to pivot. Pivotal movement of the rotating block (33) causes it to engage a first one of the limiting blocks (34), thereby driving the rotating member (31) to move the power generation coil module (1) away from a first one of the magnetic members (2). This movement changes a magnetic flux within the power generation coil module (1), inducing electrical energy in the coil winding (12). As the power generation coil module (1) subsequently approaches a second one of the magnetic members (2), the magnetic flux changes again, thereby inducing electrical energy.

Wherein release of the handbrake lever (101) causes the gear assembly to drive the rotating block (33) to pivot in a reverse direction. This reverse pivotal movement causes the rotating block (33) to engage a second one of the limiting blocks (34), thereby driving the rotating member (31) to move the power generation coil module (1) away from a magnetic member (2). This movement changes the magnetic flux within the power generation coil module (1), inducing electrical energy in the coil winding (12). As the power generation coil module (1) subsequently approaches another magnetic member (2), the magnetic flux changes again, thereby inducing electrical energy.

### Embodiment 10,

FIG. 12 illustrates an embodiment wherein the rotary self-power generating device (4) is associated with a gear shifting device. A rotating shaft of a gear shift pedal (102) is connected to the rotating block (33) and is configured to drive the rotating block (33) to pivot.

Wherein pivotal movement of the rotating block (33) causes it to engage a first one of the limiting blocks (34), thereby driving the rotating member (31) to move the power generation coil module (1) away from a first one of the magnetic members (2). This movement changes a magnetic flux within the power generation coil module (1), inducing electrical energy in the coil winding (12). As the power generation coil module (1) subsequently approaches a second one of the magnetic members (2), the magnetic flux changes again, thereby inducing electrical energy.

Wherein rotation of the pedal shaft in an opposite direction drives the rotating block (33) to pivot in an opposite direction, causing it to engage a second one of the limiting blocks (34) and thereby driving the rotating member (31) to move the power generation coil module (1) away from a magnetic member (2). This movement changes the magnetic flux within the power generation coil module (1), inducing electrical energy in the coil winding (12). As the power generation coil module (1) subsequently approaches another magnetic member (2), the magnetic flux changes again, thereby inducing electrical energy.

The foregoing descriptions of preferred embodiments are merely illustrative. The present invention is not limited to the specific embodiments described above. Any modifications, equivalent substitutions, improvements, or variations made within the spirit and scope of the present invention, which achieve the same technical effects through substantially the same or equivalent means, are intended to be included within the scope of protection of the present invention. Indeed, the technical solutions and/or embodiments of the present invention may be subject to various modifications and variations within the scope of the appended claims.

## Claims

1. A rotary self-power generating device, comprising:
a power generation coil module (1);
a magnetic member (2); and
a rotary assembly (3) operatively connected to a drive mechanism;
wherein one of the power generation coil module (1) and the magnetic member (2) is mounted on the rotary assembly (3) such that, upon actuation by the drive mechanism, the rotary assembly (3) causes a relative rotational movement between the power generation coil module (1) and the magnetic member (2); wherein said relative rotation is configured to correspondingly induce a change in magnetic flux within the power generation coil module (1) to generate electrical energy in the power generation coil module (1);
and wherein output terminals of the power generation coil module (1) are configured for connection to an electrical load to output the generated electrical energy.

2. The rotary self-power generating device of claim 1, wherein the rotary assembly (3) comprises a rotating member (31) and a fixed member (32), the rotating member (31) is pivotally connected to the fixed member (32) by a rotating shaft, the power generation coil module (1) and the magnetic member (2) are respectively installed on the rotating member (31) and the fixed member (32), and the rotating member (31) is connected to the drive mechanism.

3. The rotary self-generating device of claim 1, wherein:
said power generation coil module (1) is mounted on said rotating member (31); and
two magnetic members (2) are disposed radially outward of an outer periphery of said rotating member (31) and at a position corresponding to said power generating coil module (1).

4. The rotational self-generating device of claim 2, wherein a portion of said power generation coil module (1) extends toward said fixed member (32), and is positioned between two magnetic members (2).

5. The rotary self-generating device of claim 2, wherein the power generation coil module (1) comprises a magnetic core (11) and a coil winding (12) wound around the magnetic core (11), wherein a portion of the magnetic core (11) extends to the fixing member (32) and is positioned between two magnetic members (2).

6. The rotary self-generating device of claim 2, wherein:
the rotating member (31) comprises a rotating block (33);
the rotating block (33) is pivotally connected to the rotating member (31),
the rotating member (31) comprises two limiting blocks (34) configured to limit a range of pivotal movement of the rotating block (33);
the rotating block (33) is connected to the drive mechanism.

7. The rotational self-generating device of claim 6, wherein the device is installed on a door and operatively connected to a lock assembly thereof, and wherein the drive mechanism is a latch bolt, a lock cylinder, or a locking bolt of the lock assembly;
the rotating member (31) further comprises a reset device;
wherein the drive mechanism is arranged to push the rotating block (33) to rotate, and one of limiting blocks (34) is arranged to push the rotating member (31) to drive the power generation coil module (1) to separate from one of magnetic members (2); wherein a change in magnetic flux of the power generation coil module (1) causes the coil winding (12) to generate induced power;
and as the power generation coil module (1) approaches another one of magnetic members (2), the magnetic flux of the power generation coil module (1) changes again to cause the coil winding (12) generating induced power;
while during the resetting of the drive mechanism, the reset device drives the rotating block (33) to rotate in a reverse direction, and one of the limiting blocks (34) pushes the rotating member (31) to drive the power generation coil module (1) to separate from one of the magnetic members (2); wherein a change in magnetic flux of the power generation coil module (1) causes the coil winding (12) to generate induced power;
and as the power generation coil module (1) approaches another one of the magnetic members (2), the magnetic flux of the power generation coil module (1) changes again, inducing the coil winding (12) to generate induced power.

8. The rotary self-generating device of claim 6, wherein:
the device is mounted on a guide rail, the guide rail being provided with a protrusion configured to abut against a rotating block (33), the rotating member (31) is further provided with a reset device;
wherein the guide rail slides, inducing the protrusion to push the rotating block (33) to rotate, and one of the limiting blocks (34) pushes the rotating member (31) to drive the power generation coil module (1) to separate from one of the magnetic members (2), thereby the magnetic flux of the power generation coil module (1) changes, inducing power generation in the coil winding (12);
while the power generation coil module (1) approaches another one of the magnetic members (2), the magnetic flux of the power generation coil module (1) changes again, inducing power generation in the coil winding (12);
while the drive mechanism resets, the reset device drives the rotating block (33) to rotate in a reverse direction, and another one of limiting blocks (34) pushes the rotating member (31) to drive the power generation coil module (1) to separate from the magnetic member (2), thereby the magnetic flux of the power generation coil module (1) changes, inducing power generation in the coil winding (12);
while the power generation coil module (1) approaches another one of the magnetic members (2), the magnetic flux of the power generation coil module (1) changes again, inducing power generation in the coil winding (12).

9. The rotational self-generating device of claim 6, wherein:
the device is mounted on a device with a rotating shaft, the rotating shaft is connected to the rotating block (33) and is arranged to drive the rotating block (33) to rotate, and one of the limiting blocks (34) is arranged to push the rotating member (31) to drive the power generation coil module (1) to separate from one of the magnetic members (2), wherein a change in magnetic flux of the power generation coil module (1) induces a coil winding (12) to generate electricity;
while the power generation coil module (1) approaches another one of the magnetic members (2), the magnetic flux of the power generation coil module (1) changes again, inducing the coil winding (12) to inductively generate electricity;
the rotating shaft is arranged to reversely rotate to drive the rotating block (33) to reversely rotate , and another one of the limiting blocks (34) is arranged to push the rotating member (31) to drive the power generation coil module (1) to separate from the magnetic member (2), wherein a change in magnetic flux of the power generation coil module (1) induces the coil winding (12) to generate electricity;
while the power generation coil module (1) approaches another one of the magnetic member (2), the magnetic flux of the power generation coil module (1) changes again, inducing the coil winding (12) to inductively generate electricity.

10. The rotary self-generating device of claim 9, wherein the rotating shaft is a hinged rotating shaft, and the rotating shaft is connected to the rotating block (33) by a gear transmission device.

11. The rotary self-generating device of claim 9, wherein the rotating shaft is a rotating shaft of a rotary switch.

12. The rotatable self-generating device of claim 9, wherein the rotating shaft is coupled to a push-button switch, the coupling between said push-button switch and said rotating shaft being formed by an interengaging rack and a gear.

13. The rotary self-generating device of claim 9, wherein the rotary shaft is coupled to a pedal assembly.
